Europäisches Patentamt

European Patent Office

Office européen des brevets

(11) Veröffentlichungsnummer: **0 321 444**
A2

# (12) EUROPÄISCHE PATENTANMELDUNG

(21) Anmeldenummer: 88890321.8

(22) Anmeldetag: 15.12.88

(51) Int. Cl.⁴: **F 42 B 5/16**
F 42 B 13/02

(30) Priorität: 16.12.87 AT 3322/87

(43) Veröffentlichungstag der Anmeldung:
21.06.89 Patentblatt 89/25

(84) Benannte Vertragsstaaten:
BE CH DE ES FR GB GR IT LI LU NL SE

(71) Anmelder: NORICUM MASCHINENBAU UND HANDEL
GESELLSCHAFT M.B.H.
Zollamtstrasse 1
A-4020 Linz (AT)

(72) Erfinder: Auer, Ekkehard, Dipl. Ing.
Gierkeweg 11
A-4040 Linz (AT)

Fuchs, Wolfgang, Dipl. Ing.
Raiffeisenstrasse 17
A-4210 Gallneukirchen (AT)

Lettner, Josef, Dipl. Ing. Dr.
Ried 25
A-4312 Ried (AT)

(74) Vertreter: Haffner, Thomas M., Dr. et al
Patentanwaltskanzlei Dipl.-Ing. Adolf Kretschmer Dr.
Thomas M. Haffner Schottengasse 3a
A-1014 Wien (AT)

(54) Treibsatz für eine Einrichtung zur Verringerung des Bodensoges an Artilleriegeschossen.

(57) Der Treibsatz (1) für eine Einrichtung zur Verringerung des Bodensoges an Artilleriegeschoßen enthält integrierte Versteifungselemente (11), welche den Treibsatz gegen mechanische Deformation in radialer Richtung schützen. Die Versteifungselemente (11) sind mit Vorteil von einem gefalteten Gitter gebildet, dessen Faltstellen abwechselnd zur Innen- und Außenseite (13, 14) des Treibsatzes weisen, wodurch sich eine Vergleichmäßigung des Abbrandes ergibt.

FIG. 3

EP 0 321 444 A2

## Beschreibung

### Treibsatz für eine Einrichtung zur Verringerung des Bodensoges an Artilleriegeschoßen

Die Erfindung bezieht sich auf einen Treibsatz für eine Einrichtung zur Verringerung des Bodensoges an Artilleriegeschoßen, insbesondere für Gasgeneratoren, welcher einen im wesentlichen axialen Gasauslaß umschließt.

Einrichtungen der eingangs genannten Art sind beispielsweise der DE-PS 28 04 270 zu entnehmen. Derartige sogenannte "Base-Bleed-Gasgeneratoren" setzen durch Verbrennung eines pyrotechnischen Treibmittels Gase frei, welche an der Heckseite des Geschoßes ausgestoßen werden. Die austretenden Gase füllen das beim Flug hinter einem Geschoß entstehende Vakuum, so daß das aerodynamische Vakuum beseitigt wird, welches die Bewegung des Geschoßes bremsen würde. Vergleichbare Vorschläge sind beispielsweise aus der US-PS 4 091 732 zu entnehmen, wobei die unterschiedlichen bekannten Lösungen Variationen in der Richtung des Ausstoßes des erzeugten Gases vorsehen.

Treibladungen für die genannten Gasgeneratoren sind üblicherweise zylinderförmig und weisen einen axialen Verbrennungskanal auf. Die Treibladungen sind in einem Gehäuse bzw. einer Isolationshülle aufgenommen, um eine stufenweise Verbrennung von innen nach außen zu gewährleisten, um die Zerstörung des Generators bei zu starker Verbrennung des Treibmittels verhindern. Das Gehäuse muß dabei so konstruiert sein, daß es allen Belastungen beim Abschuß sicher standhält, die zu einem guten Teil auch von Treibsatz herrühren. Um dies sicherzustellen kann das Gehäuse entsprechend massiv hergestellt werden. Es ist bekannt, die Gehäuse derartiger Gasgeneratoren aus Leichtmetallen, insbesondere Aluminium, auszubilden, wobei diese Gehäuse üblicherweise im wesentlichen topfförmig ausgestaltet sind.

Als Treibsätze bzw. Brennstoffkörper für die Gasgeneratoren kommen übliche Mischungen eines Oxidators mit einem Bindemittel in Frage. Die mechanischen Eigenschaften derartiger Treibsätze bzw. Brennstoffkörper variieren je nach dem gewählten Material und mit Rücksicht auf die hohe Beschleunigung von Geschoßen werden an die mechanischen Werte des Brennstoffkörpers, insbesondere an die Härte, den E-Modul, die Bruchdehnung und die Festigkeit, hohe Forderungen gestellt. Bei den bekannten Konstruktionen kann es aber immer noch vorkommen, daß durch die hohe Anfangsbeschleunigung und durch zu hohe Innendrücke im Gasgeneratorgehäuse unzulässige Verformungen des Brennstoffkörpers beobachtet werden. Wenn beispielsweise der Innendruck im Gasgeneratorgehäuse nicht schnell genug abgebaut werden kann oder aber der E-Modul des verwendeten Treibsatzes zu gering ist, bzw. den Anforderungen der Konstruktion des Gehäuses nicht hinreichend angepaßt ist, wird beobachtet, daß die Ausströmöffnungen durch verformte Treibsätze verstopft werden und Teile des Treibsatzes sogar extrudiert werden. Eine auch nur kurzfristige Blockade der Ausströmöffnungen des Gasgenerators durch unzulässige Verformungen des Brennstoffkörpers führt regelmäßig zur Zerstörung des Gehäuses des Gasgenerators. In der Folge treten die bekannten Verzögerungen des Geschoßes durch das sich ausbildende aerodynamische Vakuum auf, wodurch die Reichweite des Geschoßes empfindlich verringert wird.

Die Zielsetzung, möglichst viel Treibmittel auf kleinem Raum unterzubringen, die Abbrenndauer sowie die in der Zeiteinheit entstehende Gasmenge bzw. Abbrennrate zu optimieren, führt zu mechanisch sehr empfindlichen Gasgeneratoren.

Die Erfindung zielt nun darauf ab, einen Treibsatz für eine Einrichtung der eingangs genannten Art zu schaffen, bei welcher neben der geforderten Festigkeit, insbesondere mechanischen Stabilität unabhängig von der Materialauswahl für den Treibsatz, eine möglichst gleichmäßige und über die gesamte Abbrenndauer konstante Gasmenge in der Zeiteinheit sichergestellt ist. Zur Lösung dieser Aufgabe besteht die Erfindung im wesentlichen darin, daß der Treibsatz Versteifungselemente gegen mechanische Deformation in radialer Richtung enthält. Dadurch, daß die Versteifungselemente gegen mechanische Deformation in radialer Richtung in den Treibsatz bzw. das Grundmaterial für den Treibsatz integriert sind, läßt sich mit derartigen Versteifungselementen nicht nur die mechanische Stabilität des Treibsatzes erhöhen, sondern auch durch entsprechende geometrische Anordnung der Versteifungselemente innerhalb des Treibsatzes die Abbrennrate entsprechend einstellen. Es hat sich gezeigt, daß ein besonders gleichmäßiger Abbrand bei hoher Stabilität des Treibsatzes dadurch erzielt wird, daß die Versteifungselemente gitterförmig ausgebildet sind und zumindest teilweise im Treibsatz eingebettet sind. Die gitterförmigen Versteifungselemente erstrecken sich hiebei zumindest teilweise in Umfangsrichtung des im wesentlichen zylindrischen Brennstoffkörpers, welcher den Treibsatz darstellt, wobei gemäß einer besonders bevorzugten Ausbildung die Ausbildung so getroffen ist, daß die Versteifungselemente als gefaltete Einlagen in einem ringförmigen Treibsatz angeordnet sind, wobei die Faltstellen abwechselnd nach innen und nach außen weisen. Zusätzlich kann mit Vorteil an der Innenseite des Treibsatzes, das ist somit an der Innenwand des im wesentlichen zylindrischen axialen Hohlraums des Brennstoffkörpers ein Gitter zu Erhöhung der Stabilität vorgesehen sein. Bei einer derartigen Ausbildung des Treibsatzes kann bereits bei der Herstellung des Treibsatzes unabhängig von der Wahl des Grundmaterials für den Brennstoffkörper eine Optimierung hinsichtlich der Brennkammer erfolgen, in welcher der Treibsatz zum Einsatz gelangen soll.

Um neben einer möglichst gleichmäßigen Abbrennrate auch bei extrem tiefen Außentemperaturen die Zündfähigkeit des Treibsatzes nicht zu beeinträchtigen, wird bevorzugt so vorge gangen, daß die Versteifungselemente von in das Material des Treibsatzes eingebetteten Faserarmierungen, insbesondere von Wirrfaserarmierungen, aus Glas-, Kohlenstoff-, oder Kunststoffasern, wie z.B. Kevlar- oder Teflonfasern gebildet sind. Durch die Materialwahl wird eine homogene Temperaturverteilung und durch die Fasern eine raschere Aufheizung der Versteifungselemente gewährleistet, so daß die Zündfähigkeit auch bei tiefsten Temperaturen aufrechterhalten wird. Insbesondere im Fall von C-Fasern oder Kunststoffasern kommt hinzu, daß die Fasern selbst brennbar sind und zu einer homogenen Temperaturverteilung auch nach der Zündung des Treibsatzes beitragen, so daß die Gefahr eines Verlöschens des Treibsatzes nach der Zündung weiter herabgesetzt wird.

Gemäß einer bevorzugten Weiterbildung der Erfindung beträgt dabei der Gewichtsanteil, insbesondere Faseranteil der Versteifungselemente im Material des Treibsatzes 5 bis 25 Gew.-%, insbesondere 10 bis 15 Gew.-%, wobei durch diesen Anteil an Fasern bereits eine hohe Versteifung erzielt wird. Vorzugsweise sind hiebei im Material des Treibsatzes Fasern einer Stärke von 5 bis 100 μm, insbesondere 10 bis 20 μm eingebettet, wodurch die Inhomogenitäten in der Temperaturverteilung, welche ein Verlöschen des Treibsatzes bewirken könnten, auf ein Minimum reduziert werden.

Die ungeordnet im Material des Treibsatzes eingebetteten Fasern sind mit Vorteil in einer Länge von 5 bis 10 mm eingebettet, wobei insbesondere bei selbstbrennbaren Fasern die Gefahr eines Verlöschens eliminiert werden kann.

Die Erfindung wird nachfolgend an Hand von in der Zeichnung dargestellten Ausführungsbeispielen näher erläutert. In dieser zeigen: Fig.1 einen konventionellen Heckteil eines Artilleriegeschoßes mit einem "Base-Bleed-Generator, Fig.2 eine schematische Darstellung der möglichen Deformation des Treibkörpers durch die Abschußbeschleunigung, und Fig.3 eine perspektivische Teilansicht eines Brennstoffkörpers mit einer erfindungsgemäßen integrierten Einlage.

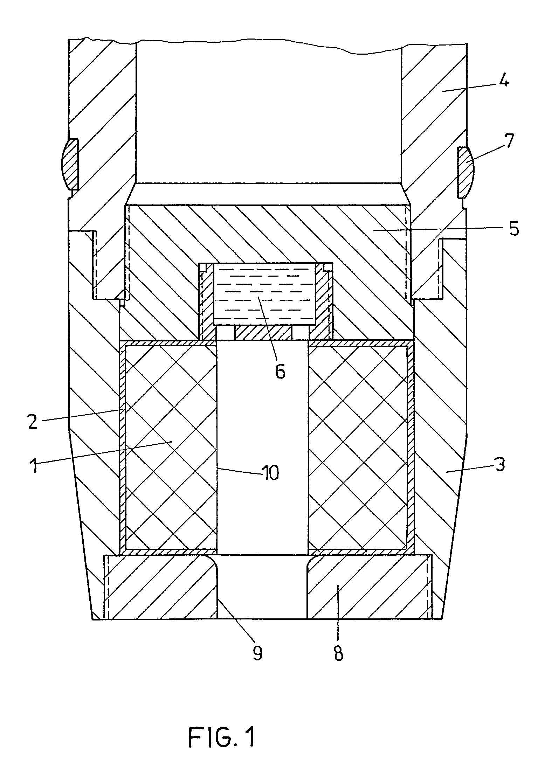

In Fig. 1 ist das Heckteil eines Geschoßes dargestellt, welches einen Gasgenerator enthält. Der Generator besteht hiebei im wesentlichen aus einem Treibsatz 1, welcher in einer isolierenden Hülle 2 enthalten ist. Das Gehäuse wird von einem Topf 3 gebildet, welcher aus Aluminium besteht. Der Topf 3 ist mit dem Grundkörper 4 der Granate verschraubt. In der hinteren Abschlußplatte 5 des Granatkörpers 4 ist ein Zünder 6 aufgenommen, über welchen der Gasgenerator gezündet wird. Am Grundkörper 4 der Granate ist weiters noch ein Führungsband 7 ersichtlich, wie es üblicherweise bei Granatkörpern vorgesehen ist. Das topfförmige Gehäuse 3 des Gasgenerators wird durch eine Abschlußplatte 8 verschlossen, welche Gasauslaßöffnungen 9 aufweist. Der Treibsatz bzw. der Brennstoffkörper 1 weist eine zentrische Bohrung 10 auf, über welche das sich bei Verbrennung des Brennstoffkörpers bildende Gas in die Auslaßöffnung 9 ausgebracht wird.

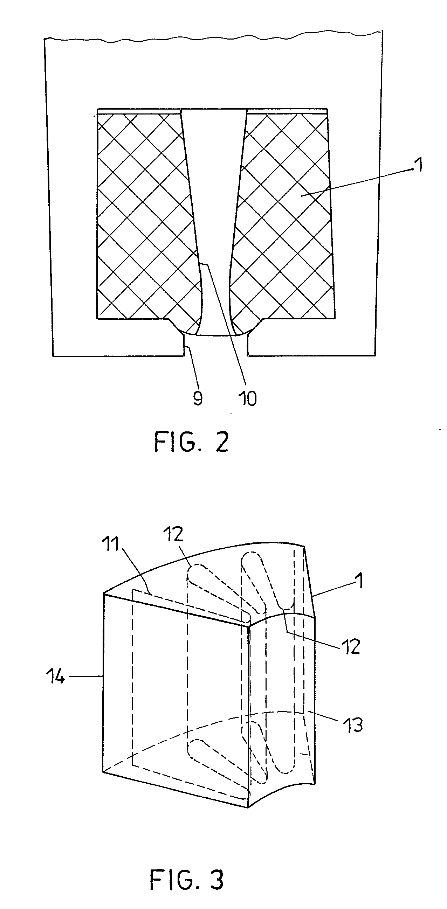

Wie aus Fig. 2 ersichtlich ist, kann es bei entsprechend geringen mechanischen Eigenschaften, insbesondere bei hoher Elastizität des Brennstoffkörpers 1 bei sehr hohen Beschleunigungen zu Verformungen der Brennstoffkörpermasse kommen, welche eine deutliche Verengung der zentralen Bohrung 10 innerhalb des Brennstoffkörpers 1 zur Folge haben. Die Verformung kann hiebei so weit gehen, daß Teile der Masse des Brennstoffkörpers 1 durch die Auslaßöffnung 9 extrudiert werden, wobei die Auslaßöffnung 9 zuvor bereits durch die sich verformende Grundmasse des Brennstoffkörpers 1 verstopft wird. Spätestens zu diesem Zeitpunkt ist der Gasgenerator wirkungslos und es kann sich hinter der Heckplatte 8 ein aerodynamisches Vakuum beim Flug des Geschoßes ausbilden, welches das Geschoß verzögert und die Reichweite verringert.

In Fig.3 ist eine Teilansicht des Treibsatzes 1 dargestellt, wobei im Inneren dieses Treibsatzes ein versteifendes Gitter 11 miteingearbeitet ist. Das versteifende Gitter verläuft hiebei im wesentlichen in Umfangsrichtung und weist Faltstellen 12 auf, welche abwechselnd zum Inneren 13 und zum Äußeren 14 des Brennstoffkörpers gerichtet sind. Zwischen den aufgrund der Faltstellen 12 benachbarten, im wesentlichen radial verlaufenden Abschnitten des Gitters 11 werden Taschen ausgebildet und es hat sich überraschenderweise gezeigt, daß eine derartige Ausbildung eine deutliche Vergleichmäßigung der Gasabgabe in der Zeiteinheit neben der Erhöhung der mechanischen Stabilität zur Folge hat. Zusätzlich kann die Innenseite 13 des Brennstoffkörpers 1 mit einem Gitter ausgekleidet sein, so daß sich eine Art Gitterkorsett ergibt, welches die mechanische Stabilität des Treibsatzes wesentlich erhöht. Als Werkstoff für das Gitter kann dabei Metall, insbesondere Stahl, Verwendung finden.

Anstelle von aus Metall ausgebildeten Gittern können auch Faserarmierungen in Form von Gittern oder Matten Verwendung finden, welche neben der Stützfunktion durch ihre speziellen Materialeigenschaften Zündungen auch bei tiefsten Temperaturen sicherstellen und ein Erlöschen weitgehend ausschließen. Es können auch Versteifungselemente 11 vorgesehen sein, welche aus einer Kombination von Metallelementen und Fasern, wie beispielsweise Glas-, Kohlenstoff- oder Kunststoffasern, aufgebaut sind.

Neben oder anstelle der Einlagerung von gitterförmigen Versteifungselementen können Wirrfasern auch ungeordnet im Material des Treibsatzes vorgesehen sein, wobei die Fasern dabei mit einer Stärke von weniger als 100 μm und einer Länge von weniger als 10 mm für eine homogene Verteilung Verwendung finden.

Für eine möglichst geringe Beeinflussung der Eigenschaften des Treibsatzes 1 ist der Gewichtsanteil der Versteifungselemente 11 allgemein geringer als 25 Gew.-% des Materials des Treibsatzes.

**Patentansprüche**

1. Treibsatz (1) für eine Einrichtung zur Verringerung des Bodensoges an Artilleriegeschoßen, insbesondere für Gasgeneratoren, welcher einen im wesentlichen axialen Gasauslaß (9) umschließt, dadurch gekennzeichnet, daß der Treibsatz (1) Versteifungselemente (11) gegen mechanische Deformation in radialer Richtung enthält.

2. Treibsatz nach Anspruch 1, dadurch gekennzeichnet, daß die Versteifungselemente (11) gitterförmig ausgebildet sind und zumindest teilweise im Treibsatz (1) eingebettet sind.

3. Treibsatz nach Anspruch 1 oder 2, dadurch gekennzeichnet, daß die Versteifungselemente (11) als gefaltete Einlagen in einem ringförmigen Treibsatz (1) angeordnet sind, wobei die Faltstellen (12) abwechselnd nach innen und nach außen weisen.

4. Treibsatz nach einem der Ansprüche 1, 2 oder 3, dadurch gekennzeichnet, daß die Innenseite des Treibsatzes (1), insbesondere eine axiale Bohrung (10) des Treibsatzes (1), mit einem Gitter versehen ist.

5. Treibsatz nach einem der Ansprüche 1 bis 4, dadurch gekennzeichnet, daß die Versteifungselemente (11) von in das Material des Treibsatzes (1) eingebetteten Faserarmierungen, insbesondere von Wirrfaserarmierungen, aus Glas-, Kohlenstoff-, oder Kunststofffasern, wie z.B. Kevlar- oder Teflonfasern gebildet sind.

6. Treibsatz nach einem der Ansprüche 1 bis 5, dadurch gekennzeichnet, daß der Gewichtsanteil der Versteifungselemente (11) im Material des Treibsatzes (1) 5 bis 25 Gew.-%, insbesondere 10 bis 15 Gew.-%, beträgt.

7. Treibsatz nach einem der Ansprüche 1 bis 6, dadurch gekennzeichnet, daß im Material des Treibsatzes (1) als Versteifungselemente (11) Fasern einer Stärke von 5 bis 100 µm, insbesondere 10 bis 20 µm eingebettet sind.

8. Treibsatz nach einem der Ansprüche 1 bis 7, dadurch gekennzeichnet, daß die Länge von ungeordnet im Material des Treibsatzes (1) eingebetteten, die Versteifungselemente (11) bildenden Fasern 5 bis 10 mm beträgt.

FIG. 1

FIG. 2

FIG. 3